# EUROPEAN PATENT APPLICATION

(11) **EP 4 850 852 A1**
(43) Date of publication of application: **09.12.2026**
(21) Application number: 25883710.3
(22) Date of filing: 28.11.2025
(51) Int. Cl.: B23K 37/04, B23K 31/02, F16H 19/04, H01M 50/516, H01M 10/04, H01M 50/211, H01M 50/249

(54) **ELECTRODE LEAD WELDING JIG DEVICE, BATTERY PACK USING SAME, AND METHOD OF MANUFACTURING SAME**

(30) Priority: 15.04.2025 KR 20250048765
(71) Applicant: LG ENERGY SOLUTION, LTD., Seoul 07335 (KR)
(72) Inventor: KIM, Byungryong, Daejeon 34122 (KR); LEE, Joon Hyuk, Daejeon 34122 (KR); LEE, Seungjun, Daejeon 34122 (KR); HAM, Jiwon, Daejeon 34122 (KR); LEE, Jungwoo, Daejeon 34122 (KR); LEE, Jaechul, Daejeon 34122 (KR)
(74) Representative: Plasseraud IP
(86) International application number: PCT/KR2025/020025
(87) International publication number: WO 2026/221190

(57) **Abstract**

Disclosed are an electrode lead welding jig device configured to prevent deformation of a jig due to thermal energy generated during electrode lead welding, a battery pack using the same, and a manufacturing method thereof.

The electrode lead welding jig device configured to weld a battery cell stack in which a plurality of battery cells including a battery case and an electrode lead protruding outward from the battery case are stacked includes: a jig movably disposed between the electrode lead and the battery case to prevent thermal energy for welding the electrode leads of the adjacent plurality of battery cells to each other from being transmitted to the plurality of battery cells toward the battery case; a pallet connected to a lower portion of the jig to vertically move the jig; and a base connected to the pallet to rotate the jig.

## Description

### [TECHNICAL FIELD]

The present invention relates to an electrode lead welding jig device, a battery pack using the same, and a manufacturing method thereof, and more particularly, to an electrode lead welding jig device configured to prevent deformation of a jig due to thermal energy generated during electrode lead welding, a battery pack using the same, and a manufacturing method thereof.

### [BACKGROUND ART]

The present invention relates to an electrode lead welding jig device, a battery pack using the same, and a manufacturing method thereof, and more particularly, to an electrode lead welding jig device configured to prevent deformation of a jig due to thermal energy generated during electrode lead welding, a battery pack using the same, and a manufacturing method thereof.

### [SUMMARY OF THE INVENTION]

### [TECHNICAL PROBLEM]

An object of the present invention is to provide an electrode lead welding jig device configured to prevent damage to a plurality of battery cells due to thermal energy generated during direct welding between electrode leads, a battery pack using the same, and a manufacturing method thereof.

Another object of the present invention is to provide an electrode lead welding jig device configured to prevent thermal deformation of a jig due to thermal energy generated during direct welding between electrode leads, a battery pack using the same, and a manufacturing method thereof.

### [SOLUTION TO THE PROBLEM]

According to an aspect of the present invention, there is provided an electrode lead welding jig device configured to weld a battery cell stack in which a plurality of battery cells including a battery case and an electrode lead protruding outward from the battery case are stacked, the device including: a jig movably disposed between the electrode lead and the battery case to prevent thermal energy for welding the electrode leads of the adjacent plurality of battery cells to each other from being transmitted to the plurality of battery cells toward the battery case; a pallet connected to a lower portion of the jig to vertically move the jig; and a base connected to the pallet to rotate the jig.

In addition, the electrode leads of the adjacent plurality of battery cells may form a welding portion configured to be bent toward each other and overlapped at a front of the battery case, and a receiving portion provided between the battery case and the welding portion, and the jig may be configured to be inserted into the receiving portion.

In addition, the battery cell stack may include a pouch-type battery cell stack accommodated directly in a pack case to constitute a battery pack.

In addition, the jig may have a cylindrical shape.

In addition, the jig may have a rectangular parallelepiped shape.

In addition, the jig may be configured such that a jig surface of the jig facing the welding portion is rotated at intervals of 90 degrees or 180 degrees to prevent the jig from being thermally deformed by the thermal energy for welding the electrode lead.

In addition, the base may include a pinion gear configured to rotate to rotate the pallet, and a rack gear meshed with the pinion gear and configured to linearly move to rotate the pinion gear.

In addition, the base may further include a pneumatic cylinder configured to linearly move the rack gear by pneumatic pressure.

In addition, the jig may be configured to be detachably attached to the pallet in a replaceable manner.

A battery pack according to an aspect of the present invention may be manufactured by the electrode lead welding jig device.

A vehicle according to an aspect of the present invention may include a battery pack manufactured by the electrode lead welding jig device.

According to an aspect of the present invention, there is provided a method of manufacturing a battery pack using an electrode lead welding jig device including a jig configured to weld electrode leads of a battery cell stack in which a plurality of battery cells including the electrode leads are stacked, the method including: forming a welding portion configured such that the electrode leads of the adjacent plurality of battery cells are bent toward each other and overlapped in front of the plurality of battery cells, and a receiving portion provided between the plurality of battery cells and the welding portion; vertically raising the jig and inserting the jig into the receiving portion to prevent the battery cell stack from being damaged by thermal energy for welding the welding portion; welding the welding portion of the electrode lead and vertically lowering the jig from the receiving portion; and rotating the jig to prevent the jig inserted into the receiving portion from being thermally deformed by the thermal energy for welding the welding portion.

In addition, the pallet connected to the lower portion of the jig may be vertically moved together with the jig so that the jig is inserted into or removed from the receiving portion, and the pallet may be rotated together with the jig so that the jig surface facing the welding portion are sequentially interchanged.

In addition, the rack gear meshed with the pinion gear may be linearly moved by pneumatic pressure of the pneumatic cylinder so as to rotate the pinion gear connected to the pallet together with the pallet.

In addition, the jig may be detached from the pallet and replaced.

### [ADVANTAGEOUS EFFECTS OF THE INVENTION]

The electrode lead welding jig device, the battery pack using the same, and the manufacturing method thereof according to the present invention can prevent damage to the plurality of battery cells or thermal deformation of the jig due to thermal energy generated during direct welding between electrode leads.

The electrode lead welding jig device, the battery pack using the same, and the manufacturing method thereof according to the present invention can extend a operational lifespan of the jig and prevent fusion with the electrode lead or welding defects due to thermal deformation of the jig.

### [BRIEF DESCRIPTION OF DRAWINGS]

FIG. 1 is a view showing a battery pack using an electrode lead welding jig device according to an embodiment of the present invention.
FIG. 2 is a view showing a vehicle equipped with a battery pack using the electrode lead welding jig device according to an embodiment of the present invention.
FIG. 3 is a view showing a battery cell stack in the battery pack using the electrode lead welding jig device according to an embodiment of the present invention.
FIG. 4 is a view showing an electrode lead welding jig device according to an embodiment of the present invention, in which a jig is inserted into a receiving portion before the electrode lead is bent.
FIG. 5 is a view showing an electrode lead welding jig device according to an embodiment of the present invention, in which the electrode lead is bent and the jig is inserted into the receiving portion.
FIG. 6 is a view showing a state in which electrode leads are coupled to each other in a battery pack using an electrode lead welding jig device according to an embodiment of the present invention.
FIG. 7 is a view showing a vertical movement of the jig so that the jig is inserted into or separated from the receiving portion in the electrode lead welding jig device according to an embodiment of the present invention.
FIG. 8 is a view showing an electrode lead welding jig device according to an embodiment of the present invention.
FIG. 9 is a view showing an exploded view of an electrode lead welding jig device according to an embodiment of the present invention.
FIG. 10 is a view showing the inside of a base in an electrode lead welding jig device according to an embodiment of the present invention.
FIG. 11 is a view showing an electrode lead welding jig device according to another embodiment of the present invention.
FIG. 12 is a view illustrating a method of manufacturing a battery pack using an electrode lead welding jig device according to an embodiment of the present invention.

### [DETAILED DESCRIPTION OF THE PREFERRED EMBODIMENTS]

The embodiments described in this specification and the configurations illustrated in the drawings are merely preferred examples of the disclosed invention, and there may be various modified examples that can replace the embodiments and drawings of this specification at the time of filing of this application.

Additionally, the same reference numbers or symbols presented in each drawing of this specification represent parts or components that perform substantially the same function. Additionally, the terminology used herein is for the purpose of describing embodiments and is not intended to limit and/or restrict the disclosed invention. Singular expressions include plural expressions unless the context clearly indicates otherwise.

In this specification, terms such as "comprising," "including," or "having" are intended to designate the presence of a feature, number, step, operation, component, part, or combination thereof described herein, and should be understood as not precluding the presence or addition of one or more other features, numbers, steps, operations, components, parts, or combinations thereof.

Additionally, terms including ordinal numbers such as "first," "second," etc., used herein may be used to describe various components, but the components are not limited by the terms, and the terms are used only for the purpose of distinguishing one component from another.

Meanwhile, the terms "front," "rear," "upper," and "lower" used in the description below are defined based on the drawings, and the shape and position of each component are not limited by these terms.

Hereinafter, embodiments according to the present invention will be described in detail with reference to the attached drawings.

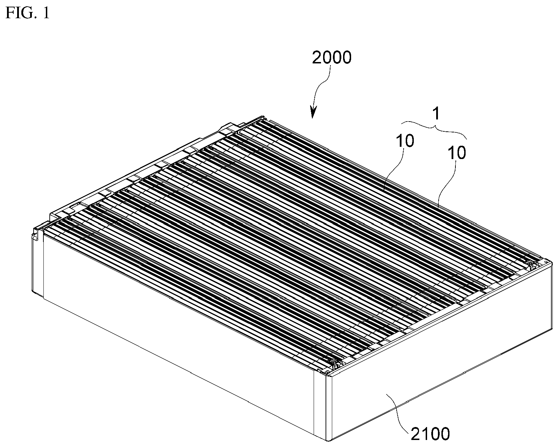

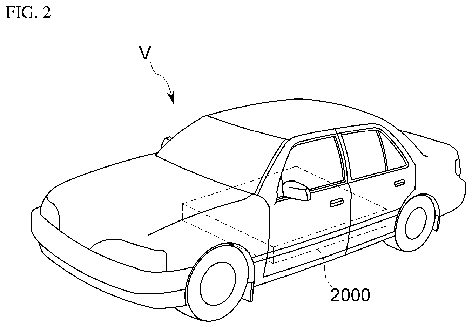

FIG. 1 is a view showing a battery pack using an electrode lead welding jig device according to an embodiment of the present invention. FIG. 2 is a view showing a vehicle equipped with a battery pack using the electrode lead welding jig device according to an embodiment of the present invention.

Referring to FIGS. 1 and 2, the battery pack 2000 according to an embodiment of the present invention may be formed by accommodating the battery cell stack 1, in which the plurality of battery cells 10 are stacked, in the pack case 2100. The battery pack 2000 may further include various control and protection systems, such as a Battery Management System (BMS).

The battery pack 2000 may be applied to various devices. Specifically, it may be applied to means of transportation such as electric bicycles, electric vehicles, and hybrid vehicles, or to an Energy Storage System (ESS), but is not limited thereto and is applicable to various devices that can use secondary batteries.

In an electric vehicle V, wheels are driven by a motor powered by the battery pack 2000, whereby the electric vehicle V may operate.

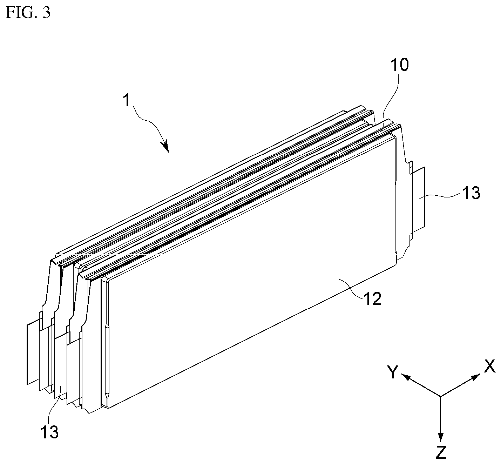

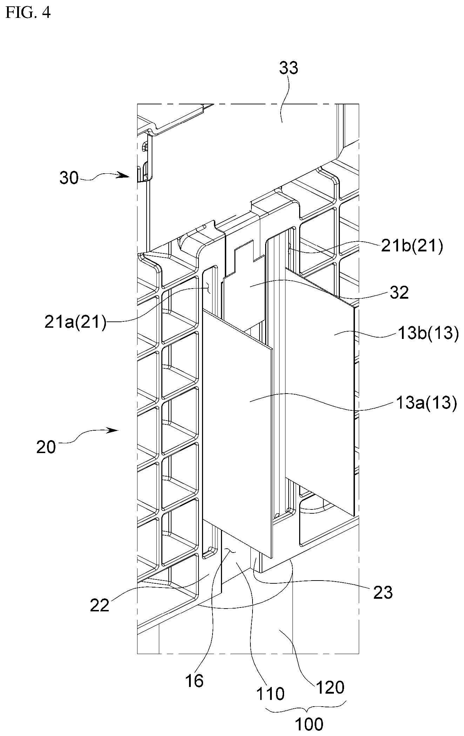

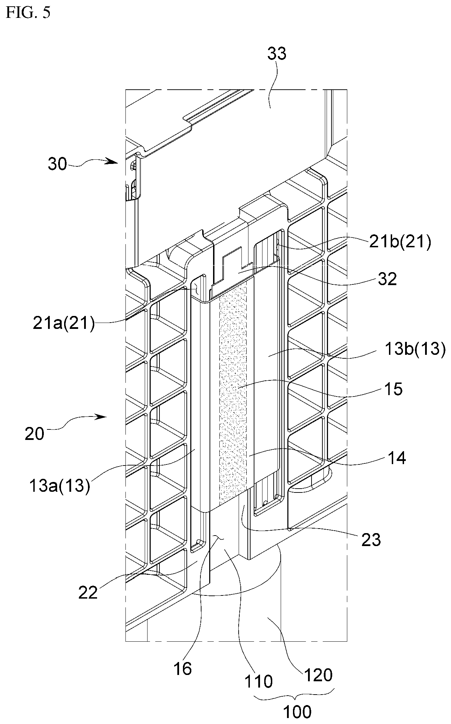

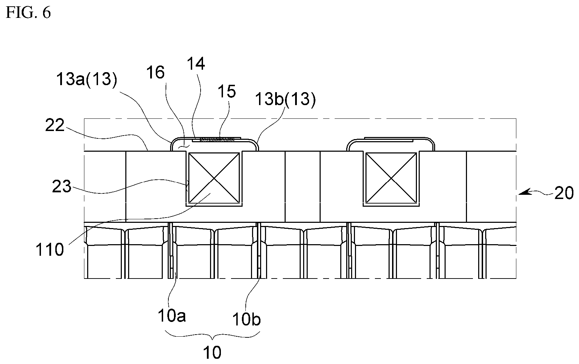

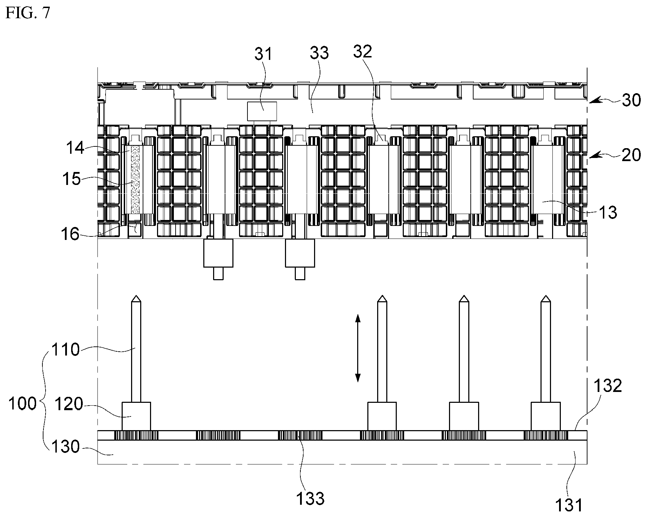

FIG. 3 is a view showing a battery cell stack in the battery pack using the electrode lead welding jig device according to an embodiment of the present invention. FIG. 4 is a view showing an electrode lead welding jig device according to an embodiment of the present invention, in which a jig is inserted into a receiving portion before the electrode lead is bent. FIG. 5 is a view showing an electrode lead welding jig device according to an embodiment of the present invention, in which the electrode lead is bent and the jig is inserted into the receiving portion. FIG. 6 is a view showing a state in which electrode leads are coupled to each other in a battery pack using an electrode lead welding jig device according to an embodiment of the present invention. FIG. 7 is a view showing a vertical movement of the jig so that the jig is inserted into or separated from the receiving portion in the electrode lead welding jig device according to an embodiment of the present invention.

Referring to FIGS. 1 to 7, the battery pack 2000 according to an embodiment of the present invention may include the battery cell stack 1 configured by stacking the plurality of battery cells 10. Each of the plurality of battery cells 10 constituting the battery cell stack 1 may include an electrode assembly (not shown) and a battery case 12 for accommodating the electrode assembly (not shown).

The electrode assembly (not shown) may be configured to include a separator (not shown) disposed between a positive electrode (not shown) and a negative electrode (not shown). Each of the plurality of battery cells 10 may be formed by accommodating the electrode assembly (not shown) in the battery case 12 and injecting an electrolyte into the battery case 12.

The electrolyte injected into the battery case 12 may be a non-aqueous electrolyte containing a lithium salt, and the non-aqueous electrolyte containing a lithium salt may include a non-aqueous electrolyte and a lithium salt. Non-aqueous electrolytes may include, but are not limited to, non-aqueous organic solvents, organic solid electrolytes, and inorganic solid electrolytes. However, it is not limited thereto.

The separator (not shown) may physically separate the positive electrode (not shown) and the negative electrode (not shown) to prevent electrical short circuits between the positive electrode (not shown) and the negative electrode (not shown). The separator (not shown) separates the negative electrode (not shown) and the positive electrode (not shown) and provides a passage for lithium ions to move, and may be used without particular limitation as long as it is generally used as a separator in a lithium secondary battery.

The positive electrode (not shown) may include a positive electrode current collector (not shown) and a positive electrode active material layer (not shown) formed on one or both sides of the positive electrode current collector (not shown). The negative electrode (not shown) may include a negative electrode current collector (not shown) and a negative electrode active material layer (not shown) formed on one or both sides of the negative electrode current collector (not shown).

The positive electrode current collector (not shown) may include aluminum (Al), and the negative electrode current collector (not shown) may include copper (Cu). However, it is not limited thereto.

The positive electrode active material layer (not shown) may have a nanostructure, which may improve electrical conductivity and increase the surface area of the positive electrode (not shown), thereby improving the electrochemical reaction rate. The negative electrode active material layer (not shown) may include graphite and may undergo surface modification treatment to maximize reactivity with lithium ions.

The positive electrode active material layer (not shown) may include a positive electrode active material, a conductive material, and a binder. Specifically, the positive electrode (not shown) may be manufactured by applying a positive electrode slurry prepared by dispersing a positive electrode active material, a conductive material, and/or a binder in a solvent such as dimethyl sulfoxide (DMSO), isopropyl alcohol, N-methylpyrrolidone (NMP), acetone, or water on one or both surfaces of the positive electrode current collector (not shown), removing the solvent of the positive electrode slurry through a drying process, and then rolling the same.

The conductive material is used to impart conductivity to the electrode, and may be used without particular limitation as long as it does not cause chemical changes in the configured battery and has electronic conductivity.

The binder may serve to improve adhesion between positive electrode active material particles and adhesion between the positive electrode active material and the positive electrode current collector (not shown).

The negative electrode active material layer (not shown) may include a negative electrode active material, a conductive material, and a binder. Specifically, the negative electrode (not shown) may be manufactured by applying a negative electrode slurry prepared by dispersing a negative electrode active material, a conductive material, and a binder in a solvent such as dimethyl sulfoxide (DMSO), isopropyl alcohol, N-methylpyrrolidone (NMP), acetone, or water on one or both surfaces of the negative electrode current collector (not shown), removing the solvent of the negative electrode slurry through a drying process, and then rolling the same.

As the negative electrode active material, various negative electrode active materials used in the art, for example, a carbon-based negative electrode active material, a silicon-based negative electrode active material, or a mixture thereof may be used.

Each of the plurality of battery cells 10 forming the battery pack 2000 according to an embodiment of the present invention may include an electrode lead 13 protruding outward from the battery case 12. The battery pack 2000 may include the battery cell stack 1 in which the plurality of battery cells 10 including the electrode leads 13 are stacked, and a lead frame 20 positioned on one side of the battery cell stack 1.

Although not shown, a lead frame 20 may be additionally positioned on the other side of the battery cell stack 1. However, in order to avoid repetition of explanation, the following description will be based on one lead frame 20 provided on one side of the battery cell stack 1.

The lead frame 20 may include an electrically insulating material. The lead frame 20 may include a plastic material. However, it is not limited thereto.

Each of the plurality of battery cells 10 according to an embodiment of the present invention may include a pouch-type battery cell 10 and may be formed in a rectangular sheet-like structure. The battery cells 10 may be provided in plurality, and the plurality of battery cells 10 may be stacked to be electrically connected to each other to form the battery cell stack 1.

In the battery cell stack 1, all of the plurality of battery cells 10 constituting the battery cell stack 1 may be connected in series in a zigzag shape. However, it is not limited to this.

The electrode leads 13 of each of the plurality of battery cells 10 may include two electrode leads 13 protruding from both sides of the battery case 12.

The battery cell stack 1 may have the plurality of battery cells 10 stacked along a direction parallel to the y-axis. The two electrode leads 13 provided in one of the plurality of battery cells 10 may protrude from the battery case 12 in an x-axis direction and a -x-axis direction, respectively.

The battery cell 10 may have a structure in which two electrode leads 13 protrude to face each other. One side of the two electrode leads 13 may be connected to an electrode assembly (not shown) accommodated inside the battery case 12, and the other side of the electrode lead 13 may protrude from the electrode assembly (not shown) to the outside of the battery case 12.

The two electrode leads 13 may have different polarities. One of the two electrode leads 13 may be a positive electrode lead, and the other may be a negative electrode lead. Based on one battery cell 10, the electrode leads 13 may protrude from both sides of the battery case 12 in a direction in which the positive electrode lead and the negative electrode lead face each other.

The battery cell 10 may be manufactured by sealing an outer peripheral portion of the battery case 12 in a state in which the electrode assembly (not shown) is accommodated in the battery case 12. The battery case 12 may be made of a laminate sheet including a resin layer and a metal layer. However, it is not limited thereto.

Although the plurality of battery cells 10 forming the battery cell stack 1 are illustrated as constituting four battery cells 10 in FIG. 3, the present invention is not limited thereto.

The lead frame 20 may be located on one side of the battery cell stack 1. The lead frame 20 may be located on one side of the battery cell stack 1 in a direction in which any one of the two electrode leads 13 protrudes.

The plurality of battery cells 10 may include a first battery cell 10a and a second battery cell 10b disposed adjacent to each other. Hereinafter, the plurality of battery cells 10 will be described based on the first battery cell 10a and the second battery cell 10b, but it is obvious that the same or similar structure may be applied to other battery cells 10 constituting the plurality of battery cells 10 excluding the first battery cell 10a and the second battery cell 10b.

The first battery cell 10a may include a first electrode lead 13a protruding outward from the battery case 12, and the second battery cell 10b may include a second electrode lead 13b protruding outward from the battery case 12.

The lead frame 20 may include a plurality of slits 21 configured to allow the plurality of electrode leads 13 to pass therethrough. The slit 21 may include a first slit 21a configured to allow the first electrode lead 13a to pass therethrough and a second slit 21b configured to allow the second electrode lead 13b to pass therethrough.

The first electrode lead 13a protruding from the battery case 12 of the first battery cell 10a and the second electrode lead 13b protruding from the battery case 12 of the second battery cell 10b may pass through the first slit 21a and the second slit 21b formed in the lead frame 20, respectively, and then be bent and overlapped to form an overlapping portion 14.

The overlapping portion 14 may include an area where the first electrode lead 13a and the second electrode lead 13b overlap. At least a part of the first electrode lead 13a and at least a part of the second electrode lead 13b may be joined to each other in the overlapping portion 14.

The overlapping portion 14 may be arranged adjacent to a surface opposite to a surface facing the battery cell stack 1 among surfaces of the lead frame 20.

The first electrode lead 13a and the second electrode lead 13b may be welded to each other at the overlapping portion 14. The first electrode lead 13a and the second electrode lead 13b may constitute a welding portion 15 configured to be welded to each other at the overlapping portion 14.

That is, the overlapping portion 14 may be formed by the first electrode lead 13a and the second electrode lead 13b protruding in the same direction for the adjacent first battery cell 10a and second battery cell 10b passing through the first slit 21a and the second slit 21b, respectively, bending in a direction perpendicular to the protrusion direction, and overlapping each other.

At least a part of the first electrode lead 13a and at least a part of the second electrode lead 13b may be joined to each other in the overlapping portion 14. Only a portion of the overlapping portion of the first electrode lead 13a and the second electrode lead 13b may be joined, or the entire overlapping portion of the first electrode lead 13a and the second electrode lead 13b may be joined.

Although the welding portion 15 is shaded in the drawing to indicate that it is formed in a part of the overlapping portion 14, the shading is only for distinguishing between the welding portion 15 and the overlapping portion 14, and is not limited thereto.

That is, the welding portion 15 may be formed in a part of the overlapping portion 14, or may be formed in the entirety of the overlapping portion 14. In addition, although there is no particular limitation on a joining method of the first electrode lead 13a and the second electrode lead 13b, it may be preferable that welding joining is performed.

The first electrode lead 13a and the second electrode lead 13b according to an embodiment of the present invention may be directly welded to each other to form a High Voltage (HV) connection. The HV connection is a connection configured to serve as a power source for supplying electric power, and may include a connection between the plurality of battery cells 10.

The lead frame 20 may include a support portion 22 configured to support the first electrode lead 13a and the second electrode lead 13b to be welded, and an opening portion 23 provided in the support portion 22. That is, the opening 23 may be formed by penetrating the center of the support portion 22.

As shown in FIG. 6, the opening portion 23 according to an embodiment of the present invention may include a form in which a side where the overlapping portion 14 is located is open and a side where the plurality of battery cells 10 are located is blocked. However, it is not limited thereto, and the opening 23 may include a form in which both the side where the overlapping part 14 is located and the side where the plurality of battery cells 10 are located are open.

Considering a material of the lead frame 20, damage may occur to the lead frame 20 itself due to thermal energy generated by welding joining between the first electrode lead 13a and the second electrode lead 13b.

The opening portion 23 penetrating the center of the support portion 22 may be provided to prevent damage to the support portion 22 of the lead frame 20 due to thermal energy generated by welding between the first electrode lead 13a and the second electrode lead 13b.

The support portion 22 may not be in direct contact with the welding portion 15 where the first electrode lead 13a and the second electrode lead 13b are welded due to the opening portion 23. There is no particular limitation on the area of the opening 23, but it may be desirable to form it with an area that can encompass the entire area of the welding portion 15 where the first electrode lead 13a and the second electrode lead 13b are welded.

The battery pack 2000 according to an embodiment of the present invention may include a sensing assembly 30 mounted on the lead frame 20. The sensing assembly 30 may include a module connector 31, a bonding plate 32, and a connecting member 33.

The sensing assembly 30 may be located on a surface opposite to one surface of the lead frame 20 facing the battery cell stack 1. The sensing assembly 30 is for a Low Voltage (LV) connection, and the LV connection may include a sensing connection for sensing and controlling voltages of the plurality of battery cells 10. Voltage information and temperature information of each of the plurality of battery cells 10 may be measured through the sensing assembly 30 and transmitted to an external Battery Management System (BMS).

The sensing assembly 30 may be connected to the electrode lead 13. The module connector 31 may be mounted on the lead frame 20 and configured to transmit and receive signals to and from an external control device to control the plurality of battery cells 10.

The bonding plate 32 may include a metal material having electrical conductivity and may be bonded to the electrode lead 13.

The connecting member 33 is a member connecting the module connector 31 and the bonding plate 32, and may include a Flexible Printed Circuit Board (FPCB) or a Flexible Flat Cable (FFC). However, it is not limited thereto.

Voltage and temperature information measured from the plurality of battery cells 10 may be sequentially transmitted to the external BMS (Building Management System) through the bonding plate 32, the connecting member 33, and the module connector 31. That is, the sensing assembly 30 may detect and control phenomena such as overvoltage, overcurrent, and overheating of each of the plurality of battery cells 10.

The battery pack 2000 according to an embodiment of the present invention may include a receiving portion 16, which is a clearance space provided between the overlapping portion 14 including the welding portion 15 and the lead frame 20 including the opening portion 23.

The receiving portion 16 may be provided between the battery cell 10 and the electrode lead 13 including the first electrode lead 13a and the second electrode lead 13b overlapping each other. The receiving portion 16 may be connected to the opening portion 23. The receiving portion 16 may include the opening portion 23. At least a portion of the receiving portion 16 may constitute the opening portion 23. However, the present invention is not limited thereto, and the receiving portion 16 may coincide with the opening portion 23.

The electrode lead welding jig device 100 according to an embodiment of the present invention may be configured to weld the battery cell stack 1 in which the plurality of battery cells 10 including the electrode leads 13 protruding outward from the battery case 12 are stacked.

The electrode lead welding jig device 100 may include a jig 110 movably disposed between the electrode lead 13 and the battery case 12 to prevent thermal energy for welding the electrode leads 13 of the adjacent plurality of battery cells 10 to each other from being transmitted to the plurality of battery cells 10 toward the battery case 12.

The electrode lead welding jig device 100 may include a pallet 120 connected to a lower portion of the jig 110 to vertically move the jig 110, and a base 130 connected to the pallet 120 to rotate the jig 110.

According to an embodiment of the present invention, the electrode leads 13 of the adjacent plurality of battery cells 10 may form a welding portion 15 bent toward each other and overlapping in front of the battery case 12, and a receiving portion 16 provided between the battery case 12 and the welding portion 15, and the jig 110 may be configured to be inserted into the receiving portion 16.

That is, the jig 110 may vertically move toward the electrode lead 13 provided on an upper portion of the jig 110 together with the pallet 120 connected to a lower portion of the jig 110 to be inserted into the receiving portion 16, or may be withdrawn from the receiving portion 16 to be separated.

Accordingly, welding may proceed by inserting the jig 110 into the receiving portion 16 to prevent thermal energy for welding the welding portion 15 included in the overlapping portion 14 where the adjacent first electrode lead 13a and second electrode lead 13b overlap from being conducted to the lead frame 20 or the battery cell 10.

The jig 110 may absorb thermal energy for welding the electrode leads 13 to each other, and may be made of a material having a higher melting point than aluminum constituting a positive electrode current collector (not shown) or copper constituting a negative electrode current collector (not shown). However, it is not limited thereto.

The jig 110 and the pallet 120 may be provided in plurality. The jig 110 and the pallet 120 may be provided in plurality to correspond to the plurality of opening portions 23 provided in the lead frame 20 or the plurality of receiving portions 16 provided between the welding portion 15 and the lead frame 20.

The plurality of jigs 110 and pallets 120 may all move vertically up and down together, or may each move vertically up and down separately.

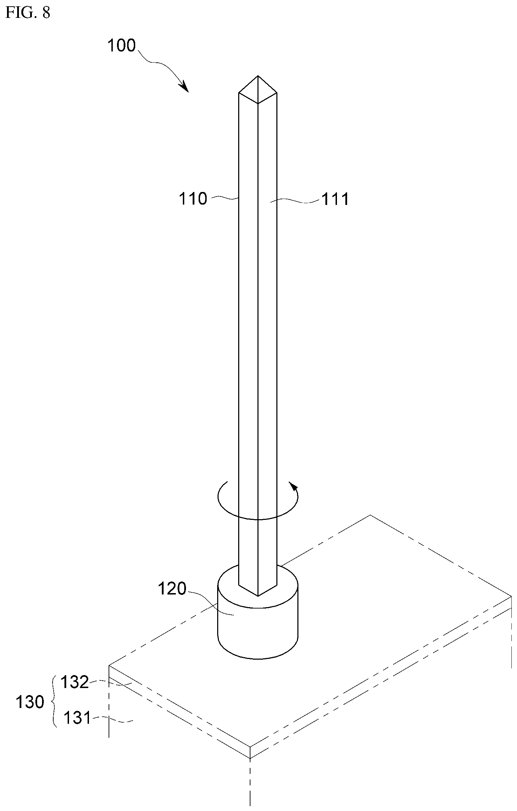

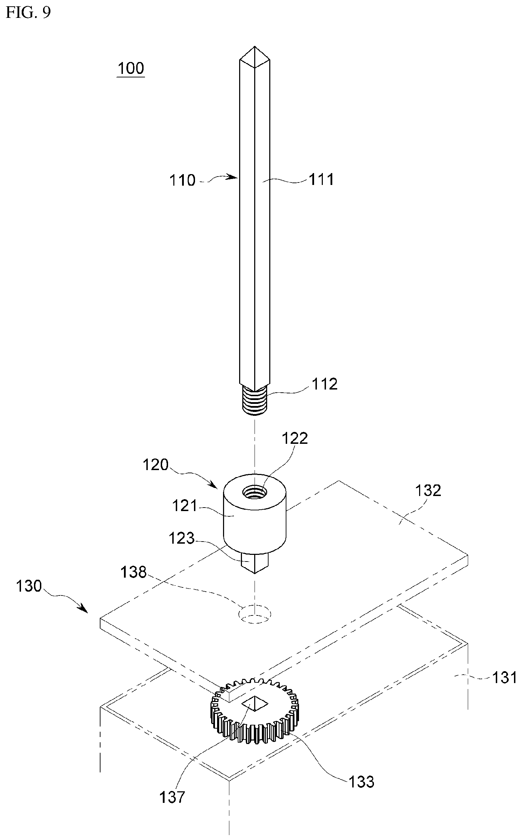

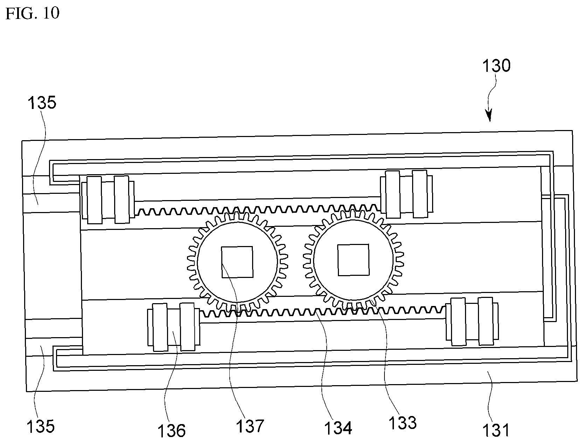

FIG. 8 is a view showing an electrode lead welding jig device according to an embodiment of the present invention. FIG. 9 is a view showing an exploded view of an electrode lead welding jig device according to an embodiment of the present invention. FIG. 10 is a view showing the inside of a base in an electrode lead welding jig device according to an embodiment of the present invention.

Referring to FIGS. 4 and 6 to 10, the jig 110 according to an embodiment of the present invention may have a rectangular parallelepiped shape. A height of the jig 110 having the rectangular parallelepiped shape may be greater than a height of the welding portion 15. A width of the jig 110 having the rectangular parallelepiped shape may be greater than a width of the welding portion 15.

Accordingly, thermal energy for welding the welding portion 15 may be entirely blocked by the jig 110 and may not be conducted to the lead frame 20 or the battery cell 10.

The jig 110 may be configured such that a jig surface 111 of the jig 110 facing the welding portion 15 is rotated at intervals of 90 degrees or 180 degrees to prevent the jig 110 from being thermally deformed by thermal energy for welding the electrode lead 13.

Heights, widths, or areas of four jig surfaces 111 of the jig 110 configured to have a rectangular parallelepiped shape and rotate to face the welding portion 15 may be the same. However, it is not limited thereto.

Thermal deformation may occur in the jig 110 inserted into the receiving portion 16 due to continuous thermal energy for welding the welding portion 15 provided in the overlapping portion 14 of the electrode lead 13. The jig 110 in which thermal deformation has occurred may tilt toward the welding portion 15, causing warpage.

The jig 110 warped by continuous welding of the welding portion 15 may be thermally fused with the electrode lead 13 provided with the welding portion 15, which may cause a welding defect of the electrode lead 13 and lead to a manufacturing defect of the battery pack 2000 (see FIG. 1).

Since the jig 110 according to an embodiment of the present invention is configured to be rotatable, the jig surfaces 111 facing the welding portion 15 may be alternately disposed to perform welding. In the jig 110 configured to rotate at intervals of 180 degrees, two jig surfaces 111 facing the welding portion 15 among the four jig surfaces 111 may be alternately disposed, thereby offsetting warpage of the jig 110 caused by thermal energy for welding the welding portion 15.

Since the jig 110 configured to rotate at intervals of 90 degrees may be alternately disposed such that all of the four jig surfaces 111 face the welding portion 15, warpage of the jig 110 due to thermal energy for welding the welding portion 15 can be more effectively prevented, and a operational lifespan of the jig 110 can be extended.

The jig 110 according to an embodiment of the present invention may be configured to be replaceable to further extend the operational lifespan. The jig 110 may be configured to be detachably attached to the pallet 120 in a replaceable manner.

The jig 110 may include a first pallet coupling portion 112 provided at the lower portion of the jig 110 to be detachably coupled to the pallet 120. The pallet 120 may include a pallet body 121 configured to support the jig 110, and a jig coupling portion 122 provided on the pallet body 121 and configured to be coupled to the first pallet coupling portion 112 of the jig 110.

The first pallet coupling portion 112 and the jig coupling portion 122 may be screw-coupled to each other, and may be fixed or separated by rotation. The jig coupling portion 122 may form a groove to accommodate the first pallet coupling portion 112. However, the present invention is not limited thereto, and the jig coupling portion 122 and the first pallet coupling portion 112 may be configured in various ways as long as they have a coupling structure capable of being detachably fixed to each other. For example, the first pallet coupling portion 112 and the jig coupling portion 122 may be press-fitted rather than screw-coupled.

In addition, the jig coupling portion 122 may include a protrusion shape protruding from the pallet body 121 rather than a groove shape, and the first pallet coupling portion 112 may include a groove shape provided at the lower portion of the jig 110 to accommodate the protrusion-shaped jig coupling portion 122.

The electrode lead welding jig device 100 according to an embodiment of the present invention may include the base 130 detachably coupled to the pallet 120. The base 130 may include a base body 131 and a base cover 132 connected to the base body 131 to cover an upper portion of the base body 131.

The base 130 may include a pinion gear 133 accommodated in the base body 131 and configured to rotate to rotate the pallet 120, and a rack gear 134 meshed with the pinion gear 133 and configured to linearly move to rotate the pinion gear 133. A rotation angle of the pinion gear 133 may be adjusted by adjusting the number of necessary gears of the pinion gear 133 and the rack gear 134.

The pallet 120 may include a base coupling portion 123 provided at a lower portion of the pallet 120 to be detachably coupled to the base 130. The base 130 may include a second pallet coupling portion 137 configured to be coupled to the base coupling portion 123 of the pallet 120.

The second pallet coupling portion 137 may be provided on the pinion gear 133, and the pallet 120 and the base 130 may be detachably coupled by coupling the base coupling portion 123 and the pinion gear 133, and the pallet 120 and the jig 110 coupled to the pallet 120 may rotate together as the pinion gear 133 rotates.

The base coupling portion 123 may have a protrusion shape protruding downward from the pallet body 121. The second pallet coupling portion 137 may form a groove provided in the pinion gear 133 to accommodate the protrusion-shaped base coupling portion 123. The base coupling portion 123 and the second pallet coupling portion 137 may be press-fitted to each other.

The protrusion shape of the base coupling portion 123 may have a rectangular parallelepiped shape, and the groove shape of the second pallet coupling portion 137 may include a rectangular parallelepiped groove corresponding to the shape of the base coupling portion 123. Through this, the rotation of the pinion gear 133 causes the rectangular parallelepiped protrusion of the base coupling portion 123 and the rectangular parallelepiped groove of the second pallet coupling portion 137 to engage with each other, thereby allowing the pallet 120 to rotate.

The base cover 132 may include a base hole 138 provided to allow the protrusion-shaped base coupling portion 123 to be inserted thereinto. The base hole 138 may be provided in plurality to correspond to the plurality of protrusion-shaped base coupling portions 123.

The base hole 138 may have an area larger than an area of the base coupling portion 123 so that the base coupling portion 123 is inserted through the base hole 138 to be coupled to the second pallet coupling portion 137, and the pallet 120 can rotate together by the rotation of the pinion gear 133.

However, the present invention is not limited thereto, and the base coupling portion 123 and the second pallet coupling portion 137 may be configured in various ways as long as they have a coupling structure capable of being detachably fixed to each other and rotated together.

In addition, the second pallet coupling portion 137 may include a protrusion shape protruding from the pinion gear 133 toward the upper pallet 120 rather than a groove shape, and the base coupling portion 123 may include a groove shape provided on the lower portion of the pallet body 121 to accommodate the protrusion-shaped second pallet coupling portion 137.

According to an embodiment of the present invention, the pallet 120 and the base 130 are coupled to be separable from each other and rotatable together, so that the pallet 120 and the jig 110 can be rotated by the rotation of the pinion gear 133, and the pallet 120 and the jig 110 can be vertically moved up and down by the separation of the pallet 120 and the base 130 to be inserted into or withdrawn from the receiving portion 16.

The pinion gear 133 may be provided in plurality. A plurality of pallets 120 and pinion gears 133 may be provided to correspond to a plurality of jigs 110 inserted into or withdrawn from the plurality of receiving portions 16, respectively.

A plurality of rack gears 134 may be provided on upper and lower portions of the pinion gear 133, respectively. However, it is not limited thereto.

Each rack gear 134 provided on the upper and lower portions of the pinion gear 133 may simultaneously mesh with a plurality of pinion gears 133. Accordingly, the plurality of pinion gears 133 meshed with the rack gear 134 may simultaneously rotate according to the linear movement of the rack gear 134, and thus, the plurality of pallets 120 and the plurality of jigs 110 may simultaneously rotate. However, it is not limited thereto.

The base 130 may include a pneumatic cylinder 135 configured to linearly move the rack gear 134 by pneumatic pressure. The pneumatic cylinder 135 may include pistons 136 provided at both ends of the rack gear 134 and configured to linearly move the rack gear 134 by pneumatic pressure.

The internal structure of the pneumatic cylinder 135 may be applied in various ways without limitation as long as it is a general double-acting pneumatic cylinder structure. Although FIG. 10 illustrates that two rack gears 134 are provided on the upper and lower portions of the pinion gear 133 and two pistons 136 are provided at both ends of each of the two rack gears 134 so that four pistons 136 are arranged, the present invention is not limited thereto.

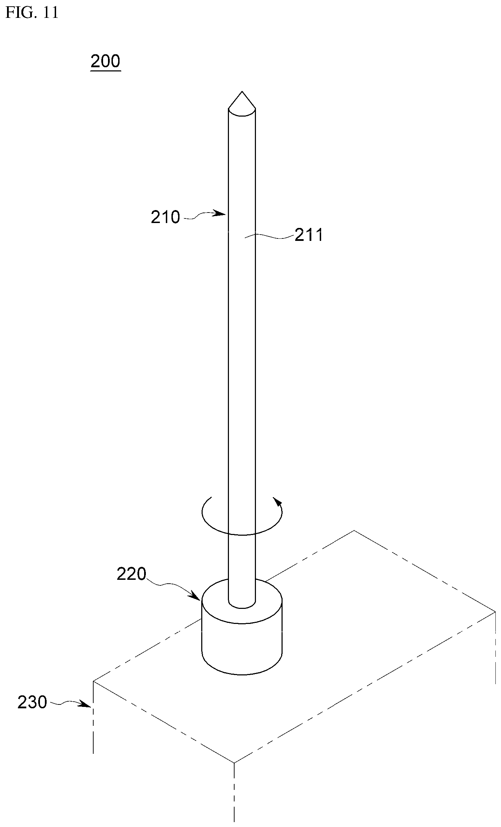

FIG. 11 is a view showing an electrode lead welding jig device according to another embodiment of the present invention. Referring to FIGS. 6 and 11, a jig 210 according to another embodiment of the present invention may have a cylindrical shape.

An electrode lead welding jig device 200 according to another embodiment of the present invention may include a jig 210 vertically movably disposed to prevent thermal energy for welding electrode leads 13 of adjacent battery cells 10 to each other from being transmitted to the plurality of battery cells 10.

The electrode lead welding jig device 200 may include a pallet 220 connected to a lower portion of the jig 210 to vertically move the jig 210, and a base 230 connected to the pallet 220 to rotate the jig 210.

The jig 210 may be configured such that a jig surface 211 of the jig 210 facing the welding portion 15 rotates to prevent the jig 210 from being thermally deformed by thermal energy for welding the electrode lead 13.

Since the jig 210 according to another embodiment of the present invention is configured to be rotatable, the jig surfaces 211 facing the welding portion 15 may be alternately disposed to perform welding. Since the jig surfaces 211 of the jig 210 configured to rotate are alternately disposed, warpage of the jig 210 due to thermal energy for welding the welding portion 15 can be prevented, and a operational lifespan of the jig 210 can be extended.

In particular, since the jig 210 according to another embodiment of the present invention has a cylindrical shape, there is no boundary between the rotating jig surfaces 211, so that the entire jig surface 211 can be disposed to face the welding portion 15 through rotation, thereby more effectively extending the operational lifespan of the jig 210.

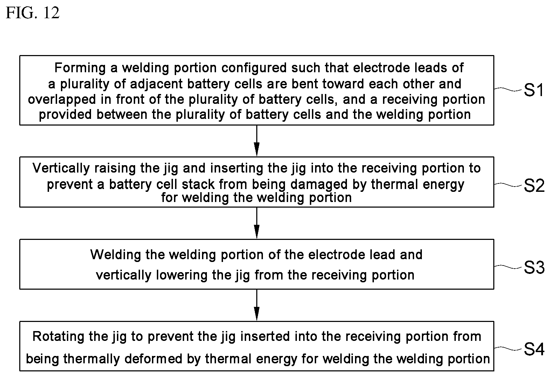

FIG. 12 is a view illustrating a method of manufacturing a battery pack using an electrode lead welding jig device according to an embodiment of the present invention. Referring to FIGS. 1 to 12, a method of manufacturing the battery pack 2000 according to an embodiment of the present invention may include forming the battery cell stack 1 by stacking the plurality of battery cells 10 including the electrode leads 13, and disposing the lead frame 20 on one side or both sides of the battery cell stack 1.

In the method of manufacturing the battery pack 2000, the overlapping portion 14 may be formed by passing the first electrode lead 13a protruding from the first battery cell 10a among the plurality of battery cells 10 and the second electrode lead 13b protruding from the second battery cell 10b among the plurality of battery cells 10 through the slits 21 formed in the lead frame 20, bending the same, and then overlapping the same.

Specifically, the second electrode lead 13b of the second battery cell 10b may be inserted into the second slit 21b among the plurality of slits 21 formed in the lead frame 20 and then bent. At this time, the second electrode lead 13b may be bent to cover the bonding plate 32.

Next, the first electrode lead 13a of the first battery cell 10a may be inserted into the first slit 21a among the plurality of slits 21 formed in the lead frame 20 and then bent. At this time, the first electrode lead 13a may be bent to cover both the bonding plate 32 and the second electrode lead 13b.

According to an embodiment of the present invention, since the second electrode lead 13b and the bonding plate 32 can be joined simultaneously while joining the first electrode lead 13a and the second electrode lead 13b, the HV connection between the plurality of electrode leads 13 and the LV connection between the electrode leads 13 and the sensing assembly 30 are not performed separately but can be performed at once, so that improvement in manufacturing process efficiency can be expected. In addition, since a separate busbar configuration for HV connection or LV connection can be eliminated, the battery pack 2000 having a more compact configuration can be manufactured.

Meanwhile, in the battery pack 2000 according to an embodiment of the present invention, the opening portion 23 formed by penetrating the center of the support portion 22 may be formed, and the opening portion 23 may be open on a side where the overlapping portion 14 is located.

The opening portion 23 may be disposed to correspond to the welding portion 15 formed by the first electrode lead 13a and the second electrode lead 13b in a welding step so as to prevent damage to the lead frame 20 when welding is performed between the first electrode lead 13a and the second electrode lead 13b.

That is, the method of manufacturing the battery pack 2000 according to an embodiment of the present invention may include forming a welding portion 15 configured to bend the electrode leads 13 of the adjacent plurality of battery cells 10 toward each other and overlap in front of the plurality of battery cells 10, and a receiving portion 16 provided between the plurality of battery cells 10 and the welding portion 15 (S1). The welding portion 15 may constitute a part of the overlapping portion 14 formed by overlapping the first electrode lead 13a and the second electrode lead 13b, or may constitute the entire overlapping portion 14.

In the method of manufacturing the battery pack 2000 according to an embodiment of the present invention, the jig 110 may be vertically raised and inserted into the receiving portion 16 to prevent the battery cell stack 1 from being damaged by the thermal energy for welding the welding portion 15 (S2), and the jig 110 may be vertically lowered from the receiving portion 16 after welding the welding portion 15 of the electrode lead 13 (S3).

The method of manufacturing the battery pack 2000 according to an embodiment of the present invention may include rotating the jig 110 inserted into the receiving portion 16 to prevent the jig 110 from being thermally deformed by thermal energy for welding the welding portion 15 (S4). That is, by rotating the jig 110 vertically lowered from the receiving portion 16 after welding the welding portion 15 before the next welding is performed, the jig surface 111 of the jig 110 vertically raised toward the welding portion 15 and facing the welding portion 15 can be alternately disposed during the next welding.

In the method of manufacturing the battery pack 2000 according to an embodiment of the present invention, the pallet 120 connected to the lower portion of the jig 110 may be vertically moved together with the jig 110 so that the jig 110 is inserted into or removed from the receiving portion 16, and the pallet 120 may be rotated together with the jig 110 so that the jig surface 111 of the jig 110 facing the welding portion 15 is alternated.

In the method of manufacturing the battery pack 2000 according to an embodiment of the present invention, the pinion gear 133 connected to the pallet 120 may be rotated together with the pallet 120 by linearly moving the rack gear 134 meshed with the pinion gear 133 through linear movement of the piston 136 by pneumatic pressure of the pneumatic cylinder 135 provided in the base 130 detachably coupled to the pallet 120 to rotate the jig 110 and the pallet 120.

In the method of manufacturing the battery pack 2000 according to an embodiment of the present invention, since the jig 110 is configured to be rotatable, welding may proceed with the jig surfaces 111 facing the welding portion 15 alternately disposed. Since the jig surfaces 111 of the jig 110 configured to rotate are alternately disposed, warpage of the jig 110 due to thermal energy for welding the welding portion 15 can be prevented, and a operational lifespan of the jig 110 can be extended.

In addition, in the method of manufacturing the battery pack 2000 according to an embodiment of the present invention, in addition to extending the operational lifespan of the jig 110 through rotation of the jig 110, when the operational lifespan of all jig surfaces 111 of the jig 110 expires due to continuous welding, only the jig 110 may be replaced by detaching the jig 110 from the pallet 120. Therefore, efficiency of use of the electrode lead welding jig device 100 can be secured by simply replacing only the jig 110.

Although the technical idea of the present invention has been described above by specific embodiments, the scope of the present invention is not limited to these embodiments.

Various embodiments modified or changed by those skilled in the art within the scope not departing from the gist of the technical idea of the present invention specified in the claims will also fall within the scope of the present invention.

## Claims

1. An electrode lead welding jig device configured to weld a battery cell stack in which a plurality of battery cells including a battery case and an electrode lead protruding outward from the battery case are stacked, the device comprising:
a jig movably disposed between the electrode lead and the battery case to prevent thermal energy for welding the electrode leads of the adjacent plurality of battery cells to each other from being transmitted to the plurality of battery cells toward the battery case;
a pallet connected to a lower portion of the jig to vertically move the jig; and
a base connected to the pallet to rotate the jig.

2. The electrode lead welding jig device of claim 1, wherein
the electrode lead of each of the adjacent plurality of battery cells forms a welding portion configured to be bent toward each other and overlapped at a front of the battery case, and a receiving portion provided between the battery case and the welding portion, and wherein
the jig is configured to be inserted into the receiving portion.

3. The electrode lead welding jig device of claim 1, wherein
the battery cell stack includes a pouch-type battery cell stack accommodated directly in a pack case to constitute a battery pack.

4. The electrode lead welding jig device of claim 1, wherein
the jig has a cylindrical shape.

5. The electrode lead welding jig device of claim 2, wherein
the jig has a rectangular parallelepiped shape.

6. The electrode lead welding jig device of claim 5, wherein
the jig is configured such that a jig surface of the jig facing the welding portion is rotated at intervals of 90 degrees or 180 degrees to prevent the jig from being thermally deformed by the thermal energy for welding the electrode lead.

7. The electrode lead welding jig device of claim 1, wherein
the base includes a pinion gear configured to rotate to rotate the pallet, and a rack gear meshed with the pinion gear and configured to linearly move to rotate the pinion gear.

8. The electrode lead welding jig device of claim 7, wherein
the base further includes a pneumatic cylinder configured to linearly move the rack gear by pneumatic pressure.

9. The electrode lead welding jig device of claim 1, wherein
the jig is configured to be detachably attached to the pallet in a replaceable manner.

10. A battery pack manufactured by the electrode lead welding jig device of claim 1.

11. A vehicle comprising the battery pack of claim 10.

12. A method of manufacturing a battery pack using an electrode lead welding jig device including a jig configured to weld electrode leads of a battery cell stack in which a plurality of battery cells including the electrode leads are stacked, the method comprising:
forming a welding portion configured such that the electrode leads of the adjacent plurality of battery cells are bent toward each other and overlapped in front of the plurality of battery cells, and a receiving portion provided between the plurality of battery cells and the welding portion;
vertically raising the jig and inserting the jig into the receiving portion to prevent the battery cell stack from being damaged by thermal energy for welding the welding portion;
welding the welding portion of the electrode lead and vertically lowering the jig from the receiving portion; and
rotating the jig to prevent the jig inserted into the receiving portion from being thermally deformed by the thermal energy for welding the welding portion.

13. The method of manufacturing a battery pack of claim 12,
wherein the pallet connected to the lower portion of the jig is vertically moved together with the jig so that the jig is inserted into or removed from the receiving portion, and
wherein the pallet is rotated together with the jig so that the jig surface facing the welding portion are sequentially interchanged.

14. The method of manufacturing a battery pack of claim 13, wherein
the rack gear meshed with the pinion gear is linearly moved by pneumatic pressure of a pneumatic cylinder so as to rotate the pinion gear connected to the pallet together with the pallet.

15. The method of manufacturing a battery pack of claim 13, wherein
wherein the jig is detached from the pallet and replaced.
